# EUROPEAN PATENT SPECIFICATION

(11) **EP 1 212 934 B1**
(45) Date of publication and mention of the grant of the patent: **01.03.2006**
(21) Application number: 01310354.4
(22) Date of filing: 11.12.2001
(51) Int. Cl.: A01G 1/00

(54) **Turf laying system**
System zum Hinlegen von Rasen
Système de pose de gazon

(30) Priority: 11.12.2000 GB 0030185
(43) Date of publication of application: 12.06.2002
(73) Proprietor: BRUNEL UNIVERSITY, Middlesex, UB8 3PH (GB); University College Chichester, Chichester, West Sussex PO19 4PE (GB)
(72) Inventor: Janaway, Lee, Uxbridge, Middlesex UB8 3PH (GB); Dyson, Rosemary University College Chichester,, Chichester, West Sussex PO19 4PE (GB)
(74) Representative: Jehan, Robert

(56) References cited:
- GB-A- 1 426 425
- US-A- 2 243 857
- US-A- 5 724 766

## Description

The present invention relates to a method and system for laying natural turf and to a system for measuring the forces applied to a natural turf surface.

Natural turf is dependant on the grass root network grown through the underlying soil. To maintain growth and integrity of the root zone, harvested natural turf requires adequate foundation support, nutrients, water and light. The physical properties of grass field natural turf, and the physical and mechanical characteristics of the turf surface interface, are of importance in the sciences of horticulture, sport and medicine. Therefore it is important that harvested natural turf has adequate support and adhesion to a substrate that preserves the grass root zone in order to ensure that force applied at the interface allows the maintenance of the physical and mechanical characteristics over the entire sample area. Moreover, consistent adhesion of harvested natural turf is crucial to ensure that dynamic physical movement (for example, of all biological species and mechanical equipment) can be performed safely.

US 5,724,766 discloses a flexible hygroscopic mat of low weight per unit volume for the landscaping of surfaces, such as the roofs of buildings is provided. Such mat comprises a rock wool mat having a thickness of approximately 2.0 to 3.5 cm and weight per unit volume between approximately 30 and 80 kg/m³ that enables it to be rolled up and living plants having roots that provide mechanical strength to the overall hygroscopic mat to form a finished product that is capable of being unrolled and applied to a roof or similar surface. The hygroscopic mat while rolled up can be readily transported to the site where it is to be installed. Also, commonly no further landscaping is required once the flexible hygroscopic mat is placed on a roof or similar surface.

Any method of fixing natural harvested turf has to allow:
(i) for the adherence of the underside of the turf to the type and orientation of substrate; and
(ii) for the root zone to be preserved and maintained.

Furthermore, to date science and industry have been unable to measure three-dimensional forces applied to a natural turf surface. Although force tables have been available for a number of years and have become widely accepted, they have not been developed with a natural turf surface interface. How a natural turf surface affects a force or forces applied to it is holding back a whole wealth of knowledge. The ability to measure, record and evaluate forces applied to a natural turf surface could have a dramatic impact on the biomechanical understanding of sports and veterinary sciences, to name but a few.

The present invention seeks to provide a method and system for laying natural turf.

According to an aspect of the present invention, there is provided a system for laying natural turf as specified in claim 1.

According to another aspect of the present invention, there is provided a method of cultivating natural turf as specified in claim 12.

There are two main facets in developing a user-friendly system of such a type. First, a force table assembly has to be mounted stably within a green field site and, secondly, a natural turf surface has to be secured to the top of the force table assembly. This second difficulty must be overcome in such a way that there is no slippage and/or perceivable difference between the mounted and surrounding turf surface. An additional practical requirement of the mounted turf is that it should be easily replaced to overcome any degradation during an experimental run.

An embodiment of the present invention is described below, by way of example only, with reference to the accompanying drawings, in which:
Figure 1 is a cross-sectional view in side elevation of an embodiment of force measuring system incorporated into the ground and into a turf section; and
Figure 2 is a cross-sectional partial view in side elevation of the force measuring system of Figure 1.

The described embodiment relates to a method for securing natural turf harvested or cultivated to any permeable or non-permeable, horizontal or vertical substrate that is static or moveable. This method also allows the grass and its root zone to be maintained as it would normally be in a field environment. The embodiment recognises the unique qualities of clay slip of compatibility with earth, water absorbency and ability to act as an adhesive.

In the embodiment described below, natural turf is secured to the top surface of a system of field mounted force platforms. In doing so it is possible to verify the method of adherence ensuring the turfs physical properties, which the physical and mechanical characteristics of the surface interface are preserved.

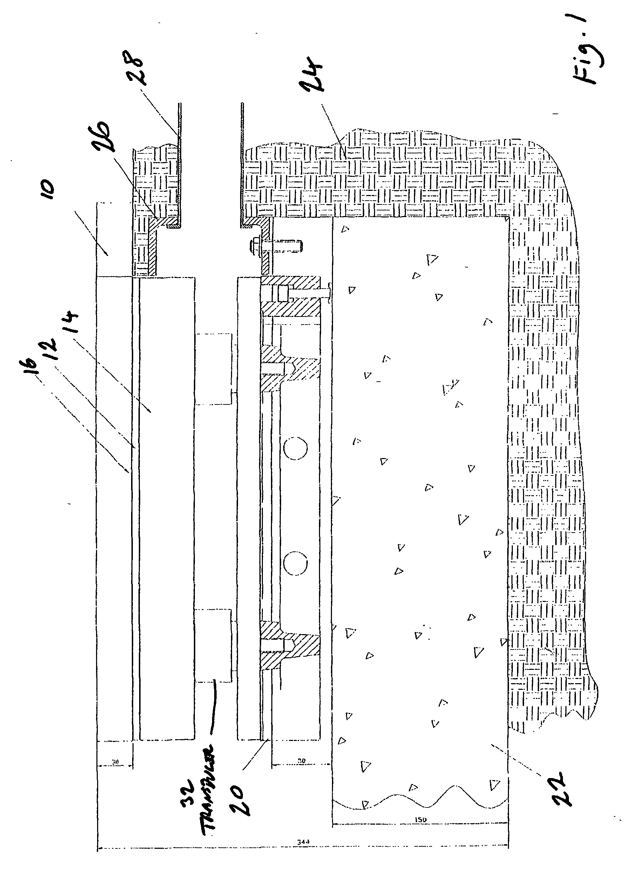

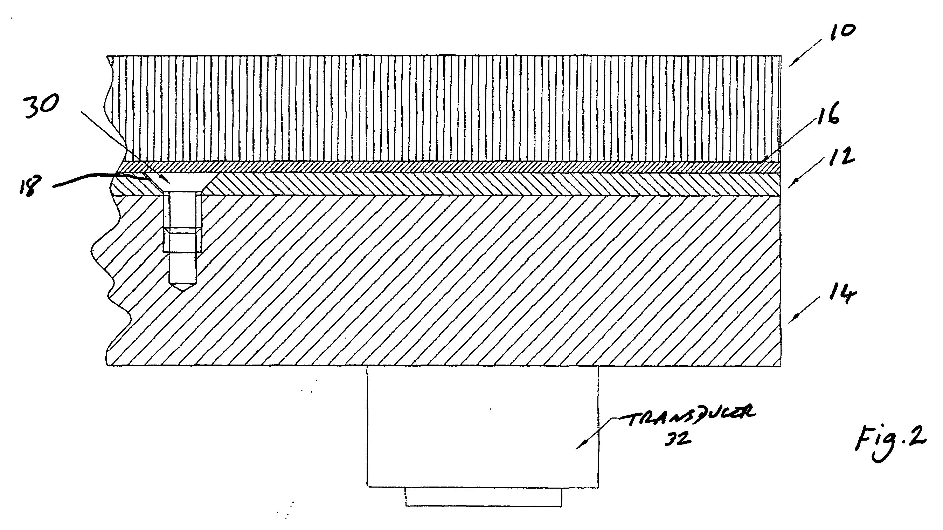

Referring to Figures 1 and 2, a moist natural turf section 10, with a full root zone (e.g. 12 to 25 mm deep), is cut or cultivated to a level thickness to an area slightly larger than the substrate 12 (in this case a plastic base plate 0.6 m x 0.4 m x 6 mm thick). The plastic base plate 12 features four countersunk holes 18 (one of which can be seen in Figure 2) to allow it and the adhered turf section 10 to be secured to the top surface of a force platform 14. The clean base plate 12 is uniformly covered in an approximately 3 to 5 mm thick layer 16 of clay slip with a serrated trowel that imprints the upper surface with ridges to a depth of about 2 mm. (The clay slip is created by working potters' clay while adding water, until a spreading constancy is achieved.)

The turf 10 is laid over the clay slip 16, root side down, then pressed firmly against the base plate 12 to adhere it to the clay slip 16. The turf 10 is then trimmed to the perimeter of the base plate 12 and allowed to set for approximately 24 hours in dry conditions. Thereafter, turf moisture and growth may be maintained by regular watering. Once set, a hole borer is located and used to remove small sections of turf to access the four base plate mounting holes 18.

The mounting system is based on a metal modular grid 20 , matched to the mounting requirements of the force platform(s) to be used (e.g. 0.6 m x 0.4 m for a Kistler 9851B force platform). Any number of grids 20 may be secured to each other along their long and/or short sides. This allows the mounting system to be designed to suit the application and installation position which may require various formations, (e.g. square, strip, cross or matrix), including mounting platform(s) across individual grid modules. In a field installation, the grid mounting system is constructed and levelled on a level concrete base 22 set into the surrounding earth 24. These are bonded together with epoxy resin so that upper load bearing surfaces of the grid modules are proud of the resin.

A continuous metal "C" section perimeter 26 is placed around the grid assembly, levelled and fixed to the epoxy resin. This "C " section 26 has a number of functions. It provides a wall to retain the surrounding earth 24, a perimeter channel for cabling, an access route to the surface for cabling 28 to recording instruments and a perimeter edge support to the natural turf of the field.

To assemble the system, a force platform unit(s) 14 is lowered and bolted to the mounting grid(s) 20. Any vacant force platform mounting positions are filled with metal covers which, in conjunction with the force platform(s), create a flush surface. The natural turf/plastics base plate assembly(s) 12 is secured to this flush surface of the force platform(s)/metal cover(s) 14 using screws 30 passed through the countersunk holes in the plastics base plate 12. The resulting system has natural turf covered force platform(s), flush and indistinguishable from the surrounding grass field.

The Figures show an example of force table system which uses, as in the example above, a 0.6 m by 0.4 m Kistler type 9851B piezoelectric force platform (Kistler, Alton, UK). Although this system is modular, the same principle could be used to mount just one force platform in a single position. The reason why a modular system is more desirable is that it enables any number of platforms to be located in any number of positions, enabling an experimenter to investigate any number of/or combinations of movements.

The particular example shown preferably features nine platform mounting positions in which the platforms are all mounted in the same orientation. The nine mounting positions are so arranged in the shape of a symmetrical cross so that the North/South dimension equals 3.0 m (5 x 0.6 m) and the East/West equals 2.0 m (5 x 0.4 m). This arrangement is achieved through using a modular metal grid 20 that can be bolted together either end on or side on in such a way that the uppermost force platform mounting surfaces are all set level. This grid assembly 20 is placed upon the concrete base 22 at the bottom of a square sided excavation in the chosen natural turf area. The assembly is accurately levelled then bonded to the concrete base using an epoxy resin.

This final level of this resin is about 10 mm below the force platform mounting surfaces.

As with the first described embodiment, a continuous metal "C" section perimeter 26 is placed around the grid assembly, levelled, sealed and fixed to the epoxy resin. This "C" section perimeter 26 has a number of functions: it provides a wall to the surrounding earth 24, a perimeter channel for all electrical wiring, a support for the conduit 28 that takes the wiring from the force platforms to the computer and finally a support for the perimeter turf edge.

In the resulting mounting area either a force platform or a metal "filler" box is fixed into each of the nine mounting positions. This leaves a level platform below the surrounding natural turf surface.

The natural turf interface is achieved by gluing natural turf to 6 mm thick plastic plates, which in turn are screwed to the top of the force platforms or filler boxes. However, it is the gluing procedure which is most critical and can be satisfactorily achieved by following this preferred sequence of preparation. The plastic plate is physically cleaned of previous turf preparation. A level of clay slip is spread uniformly over the plastic plate using a serrated edged so that the resulting peaks are no more than 5 mm high. A piece of turf, larger than the plastics plate is placed on the clay slip and turf pressed towards the plate. The assembly is then left for a minimum of 12 hours to allow the clay slip to dry. Once dry the turf is trimmed with a knife to the perimeter of the plate and a cork borer used to gain access to the 4 plastic plate to force platform mounting screws.

The pre-prepared turf plates are then screwed to the force platforms or filler boxes and the resulting apparatus is ready to use. In use, transducer 32 detects forces applied to the turf, the signals from which are coupled to a processing system (not shown), such as a computer, for processing. The type of transducer and processing can be chosen by the skilled person readily from the teachings herein.

Another advantage of this system is that the modular metal grids have an array of fixing positions that allow the force platforms to be placed in half positions to accommodate any positional variation the user may desire.

## Claims

1. A natural turf laying system including a substrate (12) for supporting natural turf (10) and **characterised in that** a layer of clay slip (16) is located between the substrate and the turf (10).

2. A system according to claim 1, including a zone allowing full root growth of turf (10).

3. A system according to claim 1 or 2, including a metal modular grid (20) for supporting the clay slip (16) and turf (10).

4. A system according to claim 3, wherein the modular grid (20) is constructed and levelled on a concrete base (22).

5. A system according to claim 3 or 4, including a retaining wall (26) around the modular grid (20).

6. A system according to claim 5, wherein the retaining wall (26) provides a perimeter channel for electrical wiring.

7. A system as claimed in any of claims I to 6 for measuring the forces applied to a natural turf surface including a force platform assembly (14) and a layer of clay slip (16) located on the platform assembly (14), the turf (10) being located on the layer of clay slip (16).

8. A system according to claim 7, including a plurality of force platform assemblies (14).

9. A system according to claim 7 or 8, wherein the or each force platform assembly (14) is a piezoelectric force platform assembly.

10. A system according to claim 7, 8 or 9, wherein the or each force platform assembly (14) includes at least one base member (12) for supporting the layer of clay slip (16).

11. A system according to claim 10, wherein the or each base member (12) is formed of a plastics material.

12. A method of cultivating natural turf (10) **characterised in that** the method includes placing a layer of clay slip (16) on a substrate (12) and cultivating turf (10) on the layer of clay slip (16).

13. A method as claimed in claim 12 further comprising providing a force platform (14) for measuring the forces applied to the natural turf surface, the layer of clay slip (16) being located on the platform (14) and the turf (10) being located on the layer of clay slip (16).

14. A method according to claim 12 or 13 wherein turf (10) is laid over the clay slip (16), root side down, then pressed firmly to adhere it to the clay slip (16).

15. A method according to claim 14, including the step of allowing the turf (10) to set for approximately 24 hours in dry conditions.

16. A method according to claim 15, wherein once the turf (10) has set, holes are made in the turf to locate base plate mounting holes (18).

## Revendications

1. Système de plantation de gazon naturel incluant un substrat (12) permettant de supporter du gazon naturel (10), et **caractérisé en ce qu'**une couche de suspension d'argile (16) est située entre le substrat et le gazon (10).

2. Système selon la revendication 1, incluant une zone permettant la croissance de l'ensemble de la racine du gazon (10).

3. Système selon l'une quelconque des revendications 1 ou 2, incluant un quadrillage modulaire (20) métallique permettant de supporter la suspension d'argile (16) et le gazon (10).

4. Système selon la revendication 3, dans lequel le quadrillage modulaire (20) est construit et nivelé sur une base de béton (22).

5. Système selon l'une quelconque des revendications 3 ou 4, incluant un mur de soutènement (26) autour du quadrillage modulaire (20).

6. Système selon la revendication 5, dans lequel le mur de soutènement (26) dispose d'une gorge périphérique pour le câblage électrique.

7. Système selon l'une quelconque des revendications 1 à 6, permettant de mesurer les forces appliquées à une surface de gazon naturel, incluant un ensemble de plateforme de forces (14) et une couche de suspension d'argile (16) située sur l'ensemble de plateforme (14), le gazon (10) étant situé sur la couche de suspension d'argile (16).

8. Système selon la revendication 7, incluant une pluralité d'ensembles de plateformes de forces (14).

9. Système selon l'une quelconque des revendications 7 ou 8, dans lequel le ou chaque ensemble de plateforme de forces (14) est un ensemble de plateforme de forces piézoélectriques.

10. Système selon l'une quelconque des revendications 7, 8 ou 9, dans lequel le ou chaque ensemble de plateforme de forces (14) inclut au moins un élément de base (12) permettant de supporter la couche de suspension d'argile (16).

11. Système selon la revendication 10, dans lequel le ou chaque élément de base (12) est réalisé dans une matière plastique.

12. Procédé permettant de cultiver du gazon naturel (10), **caractérisé en ce que** le procédé inclut le placement d'une couche de suspension d'argile (16) sur un substrat (12) et la culture du gazon (10) sur la couche de suspension d'argile (16).

13. Procédé selon la revendication 12, comprenant en outre la fourniture d'une plateforme de forces (14) permettant de mesurer les forces appliquées à la surface de gazon naturel, la couche de suspension d'argile (16) étant située sur la plateforme (14), et le gazon (10) étant situé sur la couche de suspension d'argile (16).

14. Procédé selon l'une quelconque des revendications 12 ou 13, dans lequel le gazon (10) est déposé sur la suspension d'argile (16), le côté racine étant orienté vers le bas, puis il est comprimé fermement afin d'adhérer à la suspension d'argile (16).

15. Procédé selon la revendication 14, incluant l'étape permettant au gazon (10) de durcir en approximativement 24 heures dans des conditions sèches.

16. Procédé selon la revendication 15, dans lequel, une fois que le gazon (10) a durci, des trous sont percés dans le gazon pour établir les trous de fixation de la plaque de base (18).

## Patentansprüche

1. System zum Legen von natürlichem Rasen mit einem Substrat (12) zum Abstützen eines natürlichen Rasens (10), **dadurch gekennzeichnet, dass** eine Tonschlämme (16) zwischen dem Substrat (12) und dem Rasen (10) angeordnet ist.

2. System nach Anspruch 1, das eine Zone umfasst, die ein volles Wurzelwachstum des Rasens erlaubt.

3. System nach Anspruch 1 oder 2, das ein metallisches modulares Gitter(20) zum Abstützen der Tonschlämme (16) und des Torfs (10) umfasst.

4. System nach Anspruch 3, wobei das modulare Gitter (20) auf einer Betonbasis (22) aufgebaut und ausgerichtet ist.

5. System nach Anspruch 3 oder 4, wobei das System eine Rückhaltewand (26) um das modulare Gitter (20) herum umfasst.

6. System nach Anspruch 5, wobei die Rückhaltewand (26) einen Umfangskanal für die elektrische Verkabelung zur Verfügung stellt.

7. System, wie es in einem der Ansprüche 1 bis 6 beansprucht ist, zum Messen der Kräfte, die auf eine natürliche Rasenoberfläche angewandt werden, wobei das System eine Kraftmessplattformeinrichtung (14) und eine Schicht Tonschlämme (16) umfasst, die auf der Plattformeinrichtung (14) angeordnet ist, wobei der Rasen (10) auf der Schicht Tonschlämme (16) angeordnet.

8. System nach Anspruch 7, wobei es eine Vielzahl von Kraftmessplattformeinrichtungen (14) umfasst.

9. System nach Anspruch 7 oder 8, wobei die oder jede Kraftmessplattformeinrichtung (14) eine piezoelektrische Kraftmessplattformeinrichtung ist.

10. System nach Anspruch 7, 8 oder 9, wobei die oder jede Kraftmessplattformeinrichtung wenigstens ein Basiselement (12) zum Abstützen der Schicht Tonschlämme (16) umfasst.

11. System nach Anspruch 10, wobei das oder jedes Basiselement (12) aus Kunststoffmaterial geformt ist.

12. Verfahren zum Kultivieren von natürlichem Rasen (10), **dadurch gekennzeichnet, dass** das Verfahren ein Platzieren einer Schicht von Tonschlämme (16) auf einem Substrat (12) umfasst und ein Kultivieren des Rasens (10) auf der Schicht von Tonschlämme (16).

13. Verfahren, wie es in Anspruch 12 beansprucht ist, wobei es ferner ein Bereitstellen einer Kraftmessplattform (14) zum Messen der Kräfte aufweist, die auf eine natürliche Rasenoberfläche aufgebracht werden, wobei die Schicht Tonschlämme (16) auf der Plattform (14) angeordnet wird und der Rasen (10) auf der Schicht Tonschlämme angeordnet wird.

14. Verfahren nach Anspruch 12 oder 13, wobei der Rasen über die Tonschlämme (16) mit der Wurzelseite nach unten gelegt wird, dann fest angepresst wird, um ihn an die Tonschlämme (16) anzuhängen.

15. Verfahren nach Anspruch 14, wobei es den Schritt umfasst, den Rasen (10) für ungefähr 24 Stunden unter trockenen Bedingungen sich setzen zu lassen.

16. Verfahren nach Anspruch 15, wobei, sobald der Rasen (10) sich gesetzt hat, Löcher in den Rasen gemacht werden, um Grundplattenbefestigungslöcher (18) anzuordnen.
